(19) Europäisches Patentamt / European Patent Office / Office européen des brevets

(11) **EP 4 318 778 A1**

(12) **EUROPEAN PATENT APPLICATION**
published in accordance with Art. 153(4) EPC

(43) Date of publication:
**07.02.2024 Bulletin 2024/06**

(21) Application number: **21933828.2**

(22) Date of filing: **31.03.2021**

(51) International Patent Classification (IPC):
**H01M 50/449** (2021.01)      **H01M 50/426** (2021.01)
**H01M 50/443** (2021.01)

(52) Cooperative Patent Classification (CPC):
Y02E 60/10; Y02P 70/50

(86) International application number:
**PCT/CN2021/084661**

(87) International publication number:
**WO 2022/205163 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• **XIONG, Changchuan**
  **Ningde, Fujian 352100 (CN)**
• **FAN, Xiaohe**
  **Ningde, Fujian 352100 (CN)**
• **WEI, Zengbin**
  **Ningde, Fujian 352100 (CN)**

(74) Representative: **Klunker IP Patentanwälte PartG mbB Destouchesstraße 68 80796 München (DE)**

(54) **SEPARATOR, ELECTROCHEMICAL APPARATUS INCLUDING SEPARATOR, AND ELECTRONIC APPARATUS**

(57) This application provides a separator, an electrochemical device containing the separator, and an electronic device. The separator includes a substrate and a first coating layer disposed on at least one surface of the substrate. The first coating layer includes a first polymer. Based on a total mass of the first coating layer, a mass percent x of the first polymer is 60 wt% to 90 wt%. A softening point of the first polymer is 90 °C to 150 °C. The separator of this application possesses excellent interfacial bonding strength, and improves kinetic performance of a lithium-ion battery, and especially cycle performance of the battery under a low-temperature condition.

FIG. 1

EP 4 318 778 A1

**Description**

**TECHNICAL FIELD**

This application relates to the field of electrochemical technology, and in particular, to a separator, an electrochemical device containing the separator, and an electronic device.

**BACKGROUND**

By virtue of a high specific energy, a high working voltage, a low self-discharge rate, a small size, a light weight, and other characteristics, lithium-ion batteries are widely used in various fields such as electrical energy storage, portable electronic devices, and electric vehicles.

With the increasingly wider application of the lithium-ion batteries in consumer terminals and other fields, people are imposing higher requirements on the charge-and-discharge cycle performance of the lithium-ion batteries. Especially, under low-temperature conditions, the actual charge and discharge performance of lithium-ion batteries is far less than the nominal value, thereby bottlenecking further application of the lithium-ion batteries.

**SUMMARY**

An objective of this application is to provide a separator, an electrochemical device containing the separator, and electronic device to improve kinetic performance of a lithium-ion battery, and especially, cycle performance of the battery under a low-temperature condition. Specific technical solutions are as follows:

It is hereby noted that in the description of this application, this application is construed by using a lithium-ion battery as an example of an electrochemical device, but the electrochemical device according to this application is not limited to the lithium-ion battery.

A first aspect of this application provides a separator. The separator includes a substrate and a first coating layer disposed on at least one surface of the substrate. The first coating layer includes a first polymer. Based on a total mass of the first coating layer, a mass percent x of the first polymer is 60 wt% to 90 wt%. A softening point of the first polymer is 90 °C to 150 °C.

The first coating layer of this application is disposed on at least one surface of the substrate. For example, the first coating layer may be disposed on one surface of the substrate, or the first coating layer may be disposed on both surfaces of the substrate. In this application, the positive electrode may specifically mean a positive electrode plate, and the negative electrode may specifically mean a negative electrode plate.

In this application, based on a total mass of the first coating layer, a mass percent x of the first polymer is 60 wt% to 90 wt%, and preferably 70 wt% to 85 wt%; and a softening point of the first polymer is 90 °C to 150 °C, and preferably 135 °C to 150 °C. Without being limited to any theory, when the content of the first polymer is overly high (for example, higher than 90 wt%), the relative content of the auxiliary binder in the first coating layer is reduced, the cohesion of the first coating layer is relatively low, and the bonding force between the first coating layer of the separator and the positive electrode plate will decrease with the reduction of the cohesion of the first coating layer. When the content of the first polymer is overly low (for example, lower than 60 wt%), interstices brought by the first polymer are reduced, thereby impeding the transmission of the electrolyte solution through the interface of the first coating layer and impairing the cycle performance of the lithium-ion battery. When the softening point of the first polymer is overly high (for example, higher than 150 °C), the first polymer can hardly be softened when heated, and the formed bonding area is relatively small, thereby impairing the bonding force between the first coating layer and the electrode plate. When the softening point of the first polymer is overly low (for example, lower than 90 °C), the first polymer is prone to block pores of the first coating layer or the separator after being softened, thereby deteriorating the kinetic performance of the lithium-ion battery. The term "softening point" means a temperature at which a substance softens. By controlling the content and softening point of the first polymer in the first coating layer to fall within the above ranges, this application obtains the first coating layer with excellent interfacial bonding performance and a moderate interstice between polymer particles, thereby effectively improving the bonding performance of the separator and the infiltration effect of the electrolyte solution, and in turn, improving the kinetic performance such as low-temperature cycle performance of the lithium-ion battery.

In an embodiment of this application, the first polymer includes at least one of vinylidene fluoride, hexafluoropropylene, ethylene, propylene, chloroethylene, chloropropylene, acrylic acid, acrylate, styrene, butadiene, or acrylonitrile.

In an embodiment of this application, a thickness of the first coating layer is 3 $\mu$m to 40 $\mu$m. Without being limited to any theory, when the thickness of the first coating layer is overly large (for example, larger than 40 $\mu$m), the ion transmission distance will be increased, and the kinetic performance of the lithium-ion battery will deteriorate, and the energy density of the battery will be impaired. When the thickness of the first coating layer is overly small (for example,

smaller than 3 μm), the infiltration of the electrolyte solution between the coating layers will be impeded, thereby being detrimental to the kinetic performance of the lithium-ion battery. By controlling the thickness of the first coating layer of this application to fall within the above range, the kinetic performance and energy density of the lithium-ion battery can be further improved.

In an embodiment of this application, in any region of 250 μm × 200 μm on a surface of the first coating layer, a number of particles of the first polymer with a maximum length of 10 μm to 30 μm is 10 to 30.

As observed with a scanning electron microscope (SEM) at a magnification of 500×, in any region of 250 μm × 200 μm on the surface of the first coating layer of the separator in this application, the number of particles of the first polymer with a maximum length of 10 μm to 30 μm is 10 to 30. Without being limited to any theory, on the one hand, by controlling the maximum length of the particles of the first polymer to fall within 10 μm to 30 μm, agglomeration caused by an overly small particle size can be avoided, thereby improving the dispersivity of the particles of the first polymer, avoiding an overly thick coating layer caused by an overly large particle size, and avoiding the resulting adverse effect on the energy density of lithium-ion battery. However, when the number of particles with a maximum length falling within 10 μm to 30 μm is overly large (for example, larger than 30), the relative content of the first polymer is relatively high, the content of the auxiliary binder is relatively low, and the cohesion of the first coating layer is relatively low. The bonding performance of the first polymer in the shape of large particles is obscured by the low cohesion of the first coating layer, thereby reducing the bonding force between the first coating layer and the positive electrode. By controlling the number of particles with a maximum length of 10 μm to 30 μm in the particles of the first polymer to fall within the above range, the particles of the first polymer can be distributed in a dot-like discrete form in the first coating layer, thereby providing a transmission channel for the electrolyte solution, and further improving the performance and especially the low-temperature performance of the lithium-ion battery.

In an embodiment of this application, an ionic resistance Z of the separator is 0.5 S2 to 1.2 Q. Without being limited to any theory, when the ionic resistance of the separator is overly low (for example, lower than 0.5 Ω), the K value of the lithium-ion battery is prone to be overly large, thereby resulting in self-discharge. When the ionic resistance of the separator is overly high (for example, higher than 1.2 Ω), the ion conductivity of the separator will be impaired, and the kinetic performance of the lithium-ion battery will be deteriorated. By controlling the ionic resistance of the separator of this application to fall within the above range, the ion conductivity of the separator can be improved, the kinetic performance of the lithium-ion battery can be improved, and the self-discharge rate of the lithium-ion battery can be reduced. The term "K value" means a voltage drop of the battery per unit time.

In an embodiment of this application, the mass percent x of the first polymer and the ionic resistance Z of the separator satisfy: Z = x·b. In the formula above, b represents a first ionic resistance coefficient, and $1 \leq b \leq 1.2$. By controlling the content of the first polymer in the first coating layer and the ionic resistance of the separator to fall within the above ranges, this application can further improve the ion conductivity of the separator, improve the kinetic performance of the lithium-ion battery, and reduce the self-discharge rate of the lithium-ion battery.

In an embodiment of this application, a bonding force F between the first coating layer and a positive electrode plate is 3 N/m to 35 N/m, and preferably 15 N/m to 30 N/m. Without being limited to any theory, when the bonding force between the first coating layer and the positive electrode plate is overly low (for example, lower than 3 N/m), the interfacial bonding strength and the structural stability of the lithium-ion battery will be impaired, and the lithium-ion battery is more prone to expand after cycling. When the bonding force between the first coating layer and the positive electrode plate is overly high (for example, higher than 35 N/m), a larger amount of binder is required, thereby impairing the energy density of the lithium-ion battery. By controlling the bonding force between the first coating layer and the positive electrode plate of this application to fall within the above range, the structural stability and energy density of the lithium-ion battery can be further improved.

In an embodiment of this application, the mass percent x of the first polymer and the bonding force F between the first coating layer and the positive electrode plate satisfy: F = x·a. In the formula above, a represents an adhesion coefficient, and $5.0 \leq a \leq 30$. When the content x of the first polymer in the first coating layer as well as the bonding force F between the first coating layer and the positive electrode plate satisfy the above relational expressions, this application can obtain the first coating layer with excellent bonding performance, thereby further improving the interfacial bonding performance of the separator.

In an embodiment of this application, the first coating layer further includes an auxiliary binder. Based on the total mass of the first coating layer, a mass percent of the auxiliary binder is 10 wt% to 40 wt%. Without being limited to any theory, when the content of the auxiliary binder in the first coating layer is overly high (for example, higher than 40 wt%), the content of the first polymer decreases. Consequently, the interstices brought by the granular first polymer are reduced, thereby impeding the transmission of the electrolyte solution between interfaces of the first coating layer, and impairing the bonding force between the first coating layer and the electrode plate. When the content of the auxiliary binder in the first coating layer is overly low (for example, lower than 10%), the cohesion of the first coating layer is relatively low, and the bonding performance of the first polymer will decline with the decrease of the cohesion of the first coating layer. By controlling the content of the auxiliary binder of this application to fall within the above range, this application can further increase the bonding force between the first coating layer and the electrode plate.

The auxiliary binder is not particularly limited in this application, as long as the auxiliary binder satisfies the requirements specified herein. For example, the auxiliary binder may include at least one of ethyl acrylate, butyl acrylate, ethyl methacrylate, styrene, chlorostyrene, fluorostyrene, methylstyrene, acrylic acid, methacrylic acid, maleic acid, acrylonitrile, or butadiene. In an embodiment of this application, one surface of the substrate includes the first coating layer, and the other surface of the substrate includes a second coating layer.

A thickness of the second coating layer in this application is 0.2 $\mu$m to 4 $\mu$m. The thickness of the second coating layer needs to avoid being overly small or overly large. When the thickness of the second coating layer is overly small (for example, smaller than 0.2 $\mu$m), the interfacial bonding force will be insufficient, and the bonding performance of the coating layer will decline. When the thickness of the second coating layer is overly large (for example, larger than 4 $\mu$m), the transmission distance of lithium ions in the separator will be increased, and the rate performance of the lithium-ion battery will be impaired.

In an embodiment of this application, the second coating layer includes a second polymer. The second polymer includes a high-molecular-weight polymer of a core-shell structure or a high-molecular-weight polymer of a non-core-shell structure. Based on a total mass of the second coating layer, a mass percent of the second polymer is 78 wt% to 87.5 wt%. By controlling the content of the second polymer to fall within the above range, this application can obtain a second coating layer with good interfacial bonding performance, thereby improving the overall kinetic performance such as low-temperature cycle performance of the lithium-ion battery.

The high-molecular-weight polymer of a core-shell structure and the high-molecular-weight polymer of a non-core-shell structure are not particularly limited in this application. For example, a main constituent of a core of the high-molecular-weight polymer of a core-shell structure may be a polymer, where the polymer may be a homopolymer polymerized from one polymerizable monomer, or a copolymer polymerized from two or more polymerizable monomers. Specifically, a core of the high-molecular-weight polymer of a core-shell structure includes at least one of ethyl acrylate, butyl acrylate, ethyl methacrylate, styrene, chlorostyrene, fluorostyrene, methylstyrene, acrylic acid, methacrylic acid, or maleic acid. A shell of the high-molecular-weight polymer of a core-shell structure may also be a homopolymer polymerized from one polymerizable monomer, or a copolymer polymerized from two or more polymerizable monomers, where the polymerizable monomers may include acrylate, an aromatic monovinyl compound, or a nitrile vinyl compound. Specifically, the shell of the high-molecular-weight polymer of a core-shell structure includes at least one of methyl acrylate, ethyl acrylate, butyl acrylate, methyl methacrylate, ethyl methacrylate, butyl methacrylate, ethylene, chlorostyrene, fluorostyrene, methylstyrene, acrylonitrile, or methacrylonitrile.

The high-molecular-weight polymer of a non-core-shell structure includes at least one of acrylic acid, acrylate, butadiene, styrene, acrylonitrile, ethylene, chlorostyrene, fluorostyrene, or propylene.

In an embodiment of this application, the second coating layer may further include a thickener, an auxiliary binder, and a wetting agent. The function of the thickener is to increase stability of a slurry and prevent the slurry from settling. The thickener is not particularly limited in this application, as long as the inventive objectives of this application can be achieved. For example, the thickener may be sodium carboxymethylcellulose. The auxiliary binder serves to assist in bonding to further improve the bonding performance of the second coating layer. The auxiliary binder is not particularly limited in this application, as long as the auxiliary binder achieves the objectives of this application. For example, the auxiliary binder may include at least one of ethyl acrylate, butyl acrylate, ethyl methacrylate, styrene, chlorostyrene, fluorostyrene, methylstyrene, acrylic acid, methacrylic acid, maleic acid, acrylonitrile, or a butadiene homopolymer or copolymer. The wetting agent serves to reduce surface energy of the slurry and prevent omitted coating. The wetting agent is not particularly limited in this application, as long as the objectives of this application can be achieved. For example, the wetting agent may include at least one of dimethylsiloxane, polyethylene oxide, oxyethylene alkylphenol ether, polyoxyethylene fatty alcohol ether, poly(oxyethylene-block-oxypropylene), or dioctyl sulfosuccinate sodium salt.

In an embodiment of this application, based on a total mass of the second coating layer, a mass percent of the second polymer is 78 wt% to 87.5 wt%, a mass percent of the auxiliary binder is 5 wt% to 10 wt%, a mass percent of the thickener is 0.5 wt% to 2 wt%, and a mass percent of the wetting agent is 7 wt% to 10 wt%, thereby obtaining a second coating layer of good bonding performance.

In an embodiment of this application, an inorganic coating layer is further disposed between the first coating layer and the substrate and/or between the second coating layer and the substrate, and a thickness of the inorganic coating layer is 0.5 $\mu$m to 6 $\mu$m.

As an example, an inorganic coating layer is disposed between the first coating layer and the substrate, and/or, an inorganic coating layer is disposed between the second coating layer and the substrate, and/or, an inorganic coating layer is disposed between the first coating layer and the substrate as well as between the second coating layer and the substrate, thereby in each case further improving the strength of the separator.

Without being limited to any theory, when the thickness of the inorganic coating layer is overly smaller (for example, smaller than 0.5 $\mu$m), the strength of the separator decreases, thereby being detrimental to the cycle performance of the lithium-ion battery. When the thickness of the inorganic coating layer is overly large (for example, larger than

6 $\mu$m), the separator becomes thicker as a whole, thereby being detrimental to the energy density of the lithium-ion battery. By controlling the thickness of the inorganic coating layer to fall within the above range, both the cycle performance and energy density of the lithium-ion battery can be improved.

In an embodiment of this application, the inorganic coating layer includes an inorganic particle. $D_{V50}$ of the inorganic particle is 0.1 $\mu$m to 3 $\mu$m. The particle size of the inorganic particle needs to avoid being overly large or overly small. When the particle size of the inorganic particle is overly large (for example, larger than 3 $\mu$m), it is difficult to implement a thin-coating design of the inorganic coating layer, and the energy density of the lithium-ion battery will be impaired. When the particle size of the inorganic particle is overly small (for example, smaller than 0.1 $\mu$m), the packing pores of the inorganic particles will be reduced, thereby impeding ion transmission, and in turn, impairing the kinetic performance of the lithium-ion battery.

The inorganic particle is not particularly limited in this application, as long as the objectives of this application can be achieved. The inorganic particle includes at least one of boehmite, magnesium hydroxide, aluminum oxide, titanium dioxide, silicon dioxide, zirconium dioxide, tin dioxide, magnesium oxide, zinc oxide, barium sulfate, boron nitride, aluminum nitride, or silicon nitride.

In an embodiment of this application, the inorganic particle may be boehmite, $D_{V50}$ of the boehmite is 0.1 $\mu$m to 3 $\mu$m, and a length-to-diameter ratio of the boehmite is 1 to 3. By controlling the particle size of the boehmite to fall within the above range, the strength of the inorganic coating layer can be further increased, thereby improving the performance of the separator.

In this application, a side, coated with the first coating layer, of the separator, may be in contact with the positive electrode plate; and a side, coated with the second coating layer, of the separator, may be in contact with the negative electrode plate. In this way, the separator is of high adhesivity to both the positive electrode plate and the negative electrode plate, and the infiltration of the electrolyte solution is more effective between the separator and the positive electrode plate, thereby improving the low-temperature cycle performance and fast-charge cycle performance of the lithium-ion battery. The separator of this application is permeable to lithium ions and impermeable to electrons.

In an embodiment of this application, the first polymer is a secondary particle. An average particle diameter $D_{50}$ of the secondary particles is 10 $\mu$m to 30 $\mu$m. The secondary particle may be formed by agglomerating primary particles of the first polymer. For example, secondary particles are formed by agglomerating primary particles of PVDF, so that a relatively large number of voids exist inside the secondary particle. The electrolyte solution can permeate into the voids more easily, thereby improving the infiltration effect of the electrolyte solution for the separator.

The method for preparing the first polymer is not particularly limited in this application, and may be a preparation method known to a person skilled in the art. For example, the preparation method may include:

vacuumizing a reactor, extracting nitrogen and feeding oxygen into the reactor, and adding deionized water, vinylidene fluoride (VDF), perfluoroalkyl carboxylate as an emulsifier, and isopropanol as a chain transfer agent into the reactor that contains a stirrer until the pressure in the reactor is approximately 3.5 MPa; and raising the temperature to 50 °C to 70 °C, rotating the stirrer at a rotation speed of 70 r/min to 100 r/min, starting the polymerization reaction, and supplementing the vinylidene fluoride monomers continuously at the same time to maintain the pressure in the reactor at 3.5 MPa until the solid content of the emulsion in the reactor reaches 25% to 30%; stopping the reaction and taking back the unreacted monomers, releasing the polymer emulsion; and performing centrifugation, washing, and drying to obtain particles of the first polymer.

The initiator is not particularly limited in this application, as long as the initiator can initiate polymerization of monomers. For example, the initiator may be dicumene hydroperoxide. The dosages of the monomers, deionized water, initiator, and chain transfer agent are not particularly limited in this application, as long as the added monomers can be polymerized. For example, the mass of the deionized water is 5 to 10 times the mass of the monomer, the mass of the initiator is 0.05% to 0.5% of the mass of the monomer, the mass of the emulsifier is 0.1% to 1% of the mass of the monomer, and the mass of the chain transfer agent is 3% to 7% of the mass of the monomer.

The positive electrode plate is not particularly limited in this application, as long as the objectives of this application can be achieved. For example, the positive electrode plate generally includes a positive current collector and a positive active material layer. The positive current collector may be aluminum foil, aluminum alloy foil, a composite current collector, or the like. The positive active material layer includes a positive active material and a conductive agent. The positive active material may include at least one of lithium nickel cobalt manganese oxide (811, 622, 523, 111), lithium nickel cobalt aluminum oxide, lithium iron phosphate, a lithium-rich manganese-based material, lithium cobalt oxide, lithium manganese oxide, lithium manganese iron phosphate, or lithium titanium oxide. The conductive agent may include at least one of conductive carbon black (Super P), carbon nanotubes (CNTs), carbon nanofibers, flake graphite, acetylene black, carbon black, Ketjen black, carbon dots, or graphene, or the like.

The negative electrode plate is not particularly limited in this application, as long as the objectives of this application can be achieved. For example, the negative electrode plate typically includes a negative current collector and a negative active material layer. The negative current collector may be copper foil, aluminum foil, aluminum alloy foil, a composite current collector, or the like. The negative active material layer includes a negative active material. The negative active material may include at least one of artificial graphite, natural graphite, mesocarbon microbeads, soft carbon, hard carbon, silicon, silicon-carbon compound, lithium titanium oxide, or the like.

The substrate in this application includes, but is not limited to, at least one of polyethylene, polypropylene, polyethylene terephthalate, polyimide, or aramid fibers. For example, the polyethylene includes a component selected from at least one of high-density polyethylene, low-density polyethylene, and ultra-high-molecular-weight polyethylene. Especially the polyethylene and the polypropylene are highly effective in preventing short circuits, and improve stability of the lithium-ion battery through a shutdown effect.

The lithium-ion battery according to this application further includes an electrolyte. The electrolyte may be one or more of a gel electrolyte, a solid-state electrolyte, and an electrolyte solution. The electrolyte solution includes a lithium salt and a nonaqueous solvent. In some embodiments of this application, the lithium salt is at least one selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, the lithium salt is $LiPF_6$ because it provides a high ionic conductivity and improves cycle properties. The nonaqueous solvent may be a carbonate compound, a carboxylate compound, an ether compound, another organic solvent, or any combination thereof. The carbonate compound may be a chain carbonate compound, a cyclic carbonate compound, a fluorocarbonate compound, or any combination thereof.

Examples of the chain carbonate compound are dimethyl carbonate (DMC), diethyl carbonate (DEC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof. Examples of the carboxylate compound are methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, or any combination thereof. Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof. Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

A second aspect of this application provides an electrochemical device, including a positive electrode plate, a negative electrode plate, a separator, and an electrolyte solution. The separator is located between the positive electrode plate and the negative electrode plate. The separator is the separator disclosed in any one of the foregoing embodiments, and exhibits good low-temperature cycle performance. A third aspect of this application provides an electronic device. The electronic device includes the electrochemical device disclosed in an embodiment of this application, and exhibits good low-temperature cycle performance.

The electronic device according to this application is not particularly limited, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The preparation process of the electrochemical device is well known to a person skilled in the art, and is not particularly limited in this application. For example, a process of manufacturing the lithium-ion battery may include: Stacking a positive electrode and a negative electrode that are separated by a separator, performing operations such as winding and folding as required on the stacked structure, placing the structure into a housing, injecting an electrolyte solution into the housing, and sealing the housing, where the separator is the foregoing separator provided in this application. In addition, an overcurrent prevention element, a guide plate, and the like may be further placed into the housing as required, so as to prevent the rise of internal pressure, overcharge, and overdischarge of the lithium-ion battery.

In this application, the term "$Dv_{50}$" is a diameter value of particles corresponding to a point at which a cumulative volume percentage of measured particles reaches 50% of a total volume of all sample particles in a volume-based particle size distribution curve viewed from a small-diameter side. In other words, the volume of particles smaller than such a diameter value accounts for 50% of the total volume of all sample particles.

This application provides a separator, an electrochemical device containing the separator, and an electronic device. The separator includes a substrate and a first coating layer disposed on at least one surface of the substrate. The first coating layer includes a first polymer. By controlling the content and softening point of the first polymer in the first coating layer to fall within the above ranges, this application obtains the first coating layer with excellent interfacial bonding performance and a moderate interstice between polymer particles, thereby effectively improving the bonding performance of the separator and the infiltration effect of the electrolyte solution, and in turn, improving the kinetic performance such as low-temperature cycle performance of the lithium-ion battery.

**BRIEF DESCRIPTION OF DRAWINGS**

To describe the technical solutions in this application or the prior art more clearly, the following outlines the drawings to be used in the embodiments of this application or the prior art. Evidently, the drawings outlined below are merely a part of embodiments of this application.

FIG. 1 is a schematic structural diagram of a separator according to a first embodiment of this application;
FIG. 2 is a schematic structural diagram of a separator according to a second embodiment of this application;
FIG. 3 is a schematic structural diagram of a separator according to a third embodiment of this application;
FIG. 4 is a schematic structural diagram of a separator according to a fourth embodiment of this application; and
FIG. 5 is a schematic structural diagram of a separator according to a fifth embodiment of this application.

**DETAILED DESCRIPTION OF EMBODIMENTS**

To make the objectives, technical solutions, and advantages of this application clearer, the following describes this application in further detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

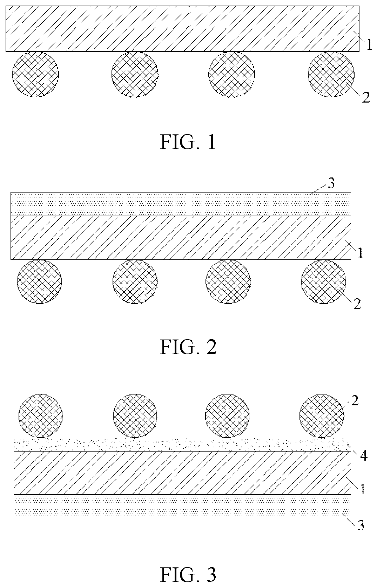

As shown in FIG. 1, a separator disclosed in this application includes a substrate 1 and a first coating layer 2 disposed on one surface of the substrate 1.

As shown in FIG. 2, a separator disclosed in this application includes a substrate 1, and a first coating layer 2 and a second coating layer 3 that are disposed on two surfaces of the substrate 1 respectively.

In an embodiment of this application, as shown in FIG. 3, an inorganic coating layer 4 is disposed between the first coating layer 2 and the substrate 1.

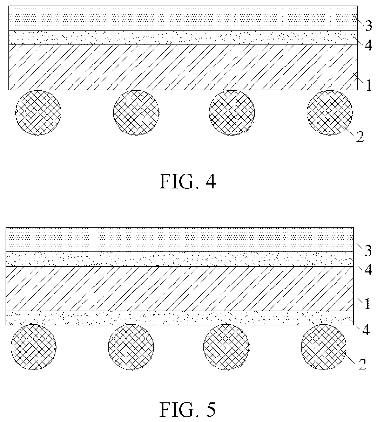

In an embodiment of this application, as shown in FIG. 4, an inorganic coating layer 4 is disposed between the substrate 1 and the second coating layer 3.

In an embodiment of this application, as shown in FIG. 5, an inorganic coating layer 4 is disposed between the substrate 1 and the first coating layer 2, and an inorganic coating layer 4 is also disposed between the substrate 1 and the second coating layer 3.

**Embodiments**

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

**Test methods and devices**

**Testing the bonding force between a first coating layer of a separator and a positive electrode plate**

Testing the bonding force between a first coating layer of a separator and a positive electrode plate with reference to the national standard GB/T 2790-1995, that is, with reference to the 180° peeling test standard. Cutting out samples of 54.2 mm × 72.5 mm from the separator coated with a first coating layer, and from the positive electrode plate, separately. Laminating a surface, coated with the first coating layer, of the separator to the positive electrode plate. Pressing the laminated plate with a hot press machine under the following conditions: temperature 85 °C, pressure 1 MPa, hot pressing time 85 s (seconds). Cutting the laminated samples into small strips of 15 mm × 54.2 mm. Testing the bonding force between the first coating layer of a separator and the positive electrode plate with reference to the 180° peeling test standard.

**Testing the thickness of the first coating layer of the separator**

1) Testing the thickness of the substrate: Cutting a substrate into 50 mm-wide sample strips along a transverse direction in a normal-temperature environment; taking three parallel samples, and measuring the thickness of each sample at 10 points distributed evenly from the center of the sample along the transverse direction, where the test instrument is a ten-thousandth micrometer thickness gauge (Mitutoyo Litematic VL-50B), the diameter of the test head is 5 mm, and the test hold-down force is 0.01 N; completing measurement of the 3 parallel samples, and then using an average value d1 of 30 measured values as the thickness of the substrate.

2) Testing the total thickness of the coating film: Applying the first coating layer onto the above substrate, and drying the substrate at 80 °C to obtain a separator coated with the first coating layer. Measuring the thickness according to a substrate thickness test method, with the uncoated side facing down, so as to obtain the total thickness d2 of the separator.

3) Calculating the thickness of the first coating layer as: d = d2 - d1.

**Testing the low-temperature performance of the lithium-ion battery**

1) Performing a first cycle of charging and discharging for a chemically formed lithium-ion battery in a 25 °C environment: Charging the battery at a constant current of 0.1 C until the voltage reaches an upper limit of 4.45 V, and then charging the battery at a constant voltage until a fully charged state, and leaving the fully charged lithium-ion battery to stand for 5 minutes.

2) Discharging the battery at a rate of 0.2 C until the voltage reaches 3 V, thereby completing the first cycle. Recording the first-cycle discharge capacity, and leaving the battery to stand for 5 minutes.

3) Charging the battery at a constant current rate of 1.5 C until the voltage reaches 4.45 V, and then charging the battery at a constant voltage until the current drops to 0.02 C, and then leaving the battery to stand for 5 minutes.

4) Adjusting the oven temperature to {25, 10, 0, -10, -20, 45, 60} °C, and then leaving the battery to stand for 5 minutes; discharging the battery at a rate of 0.2 C until the voltage reaches 3 V, and then leaving the battery to stand for 5 minutes.

5) Adjusting the oven temperature to 25 °C, and leaving the lithium-ion battery to stand for 60 minutes.

6) Repeating step 4) to step 5) cyclically to carry out the test under the same conditions except that the temperature is adjusted to the values in step 4) successively. Recording the final discharge capacity of the lithium-ion battery tested at each temperature, and then selecting the final discharge capacity of the lithium-ion battery tested at -20 °C, and using the following formula to calculate the low-temperature capacity retention rate of the lithium-ion battery tested at -20 °C:

$$\text{Low-temperature capacity retention rate} = (\text{final discharge capacity of the lithium-ion battery tested at } -20 \text{ °C/first-cycle discharge capacity of the lithium-ion battery tested at } 25 \text{ °C}) \times 100\%.$$

**Testing the softening point of the first polymer**

Testing the softening point by a general-purpose differential scanning calorimeter (DSC) method: Taking 5 mg of the first polymer in each embodiment and each comparative embodiment as a sample, raising the temperature of the sample to 150 °C at a speed of 5 °C/min, plotting a DSC curve with the collected values, and determining the softening point, that is, the softening temperature, of the first polymer according to the resultant DSC curve.

**Testing the number of particles of the first polymer in an area of 250 $\mu$m $\times$ 200 $\mu$m on the surface of the first coating layer**

Cutting the separator coated with the first coating layer into a 10 mm $\times$ 10 mm sample, and then placing the sample under a SEM to observe the sample at a magnification of 500$\times$. Selecting 5 random regions of 250 $\mu$m $\times$ 200 $\mu$m in the field of view. Recording the number of particles of the first polymer with a maximum particle length of 10 $\mu$m and 30 $\mu$m in each selected region, and then calculating the average value of the numbers in the selected regions as the number of particles of the first polymer with the maximum particle length of 10 $\mu$m to 30 $\mu$m per unit area of the first coating layer.

**Testing the ionic resistance of the separator**

1. Preparing a symmetrical battery

Combining the separator and the electrode plates to form a symmetrical battery: The number of separator layers in the symmetrical battery ascends from 2 to 4, 6, 8, 10, and 12 stepwise. Both electrode plates of the symmetrical battery are negative electrode plates that have not undergone charge-and-discharge cycles (that is, fresh negative electrodes).

2. Testing the ionic resistance of the separator sample

First, measuring the resistance values of the separators of the symmetrical battery with different numbers of separator layers by use of electrochemical impedance spectroscopy (EIS), and then fitting the measured resistance values of the separators of the symmetrical battery with different numbers of separator layers stepwise, and calculating the ionic resistance of a single layer of separator according to the fitting result, measured in units of Q.

**Testing the 1.5 C discharge rate performance**

Charging a chemically formed lithium-ion battery at a constant current rate of 0.2 C at 25 °C until the voltage reaches 4.45 V, and then charging the battery at a constant voltage until the current is less than or equal to 0.05 C; leaving the battery to stand for 30 minutes, and then discharging the battery at a constant current rate of 0.2 C until the voltage reaches 3.0 V, and measuring the 0.2 C-rate discharge capacity of the lithium-ion battery.
Charging a lithium-ion battery at a constant current rate of 0.2 C at 25 °C until the voltage reaches 4.45 V, and then charging the battery at a constant voltage until the current is less than or equal to 0.05 C; leaving the battery to stand for 30 minutes, and then discharging the battery at a constant current rate of 1.5 C until the voltage reaches 3.0 V, and measuring the 1.5 C-rate discharge capacity of the lithium-ion battery. Performing calculation according to the following formula:

$$\text{1.5 C-rate discharge capacity retention rate of the lithium-ion secondary}$$

$$\text{battery (\%)} = \text{1.5 C-rate discharge capacity}/\text{0.2 C-rate discharge capacity} \times 100\%.$$

**Embodiment 1**

<1-1. Preparing particles of a first polymer>

Vacuumizing a reactor, extracting nitrogen and feeding oxygen into the reactor, and adding deionized water, vinylidene fluoride (VDF), dicumene hydroperoxide as an initiator, perfluoroalkyl carboxylate as an emulsifier, and isopropanol as a chain transfer agent into the reactor that contains a stirrer until the pressure in the reactor is 3.5 MPa. In the mixture above, the mass of the deionized water is 7 times the mass of the vinylidene fluoride monomer, the mass of the initiator is 0.2% of the mass of the vinylidene fluoride monomer, the mass of the emulsifier is 0.5% of the mass of the vinylidene fluoride monomer, and the mass of the chain transfer agent is 5% of the mass of the vinylidene fluoride monomer. Raising the temperature to 60 °C, rotating the stirrer at a rotation speed of 80 r/min, starting the polymerization reaction, and supplementing the vinylidene fluoride monomers continuously at the same time to maintain the pressure in the reactor at 3.5 MPa until the solid content of the emulsion in the reactor reaches 25%; stopping the reaction and taking back the unreacted monomers, releasing the polymer emulsion; and performing centrifugation, washing, and drying to obtain particles of the first polymer. The softening point of the particles of the first polymer is 120 °C, and $D_{V50}$ of the particles is 20 $\mu$m.

<1-2. Preparing a positive electrode plate>

Mixing lithium cobalt oxide as a positive active material, acetylene black, and polyvinylidene difluoride (PVDF) at a mass ratio of 94: 3: 3, adding N-methylpyrrolidone (NMP) as a solvent, blending the mixture to form a slurry with a solid content of 75%, and stirring well. Coating one surface of a 12-$\mu$m thick aluminum foil with the slurry evenly, and drying the slurry at 90 °C. Cold-pressing the foil to obtain a positive electrode plate coated with a positive active material layer that is 100 $\mu$m thick. Subsequently, repeating the foregoing steps on the other surface of the positive electrode plate to obtain a positive electrode plate coated with the positive active material layer on both sides. Cutting the positive electrode plate into a size of 74 mm $\times$ 867 mm, welding tabs, and leaving the positive electrode plate ready for future use.

<1-3. Preparing a negative electrode plate>

Mixing artificial graphite as a negative active material, acetylene black, styrene butadiene rubber, and sodium carboxymethyl cellulose at mass ratio of 96: 1: 1.5: 1.5, adding deionized water as a solvent, blending the mixture to form a slurry in which the solid content is 70%, and stirring the slurry well. Coating one surface of an 8-$\mu$m thick copper foil with the slurry evenly, and drying the foil at 110 °C. Performing cold calendering to obtain a negative electrode plate coated with a 150-$\mu$m thick negative active material layer on a single side. Subsequently, repeating the foregoing coating step on the other surface of the negative electrode plate to obtain a negative electrode plate coated with the negative active material layer on both sides. Cutting the negative electrode plate into a size of 74 mm $\times$ 867 mm, welding tabs, and leaving the negative electrode plate ready for use.

<1-4. Preparing a separator>

Adding the prepared particles of the first polymer and the acrylonitrile as an auxiliary binder into a stirrer at a mass ratio of 90: 10, stirring well, and then adding deionized water and keeping stirring, adjusting the viscosity of the slurry to 100 mPa·s, and adjusting the solid content to 12%, so as to obtain a slurry A. Applying the slurry A onto one surface of a 5 $\mu$m-thick PE substrate evenly to obtain a 20 $\mu$m-thick first coating layer. Completing drying in an oven to obtain a separator.
By observing the prepared separator with a SEM at a magnification of 500$\times$, it is found that, in any region of 250 $\mu$m $\times$ 200 $\mu$m (unit area) on the surface of the first coating layer of the separator, the number of particles of the first polymer with a maximum length of 10 $\mu$m to 30 $\mu$m is 30.

<1-5. Preparing an electrolyte solution>

Mixing ethylene carbonate (EC), diethyl carbonate (DEC), propylene carbonate (PC), propyl propionate (PP), and vinylene carbonate (VC) at a mass ratio of 20: 30: 20: 28: 2 in an environment with a moisture content less than 10 ppm, so as to obtain a nonaqueous organic solution. Adding lithium hexafluorophosphate (LiPF$_6$) into the nonaqueous organic solvent to dissolve, and stirring well to obtain an electrolyte solution. The mass ratio between LiPF$_6$ and the nonaqueous organic solvent is 8: 92.

<1-6. Preparing a lithium-ion battery>

Stacking the prepared positive electrode plate, separator, and negative electrode plate sequentially in such a way that the surface, coated with the first coating layer, of the separator is in contact with the positive electrode plate. Winding the stacked structure to obtain an electrode assembly. Putting the electrode assembly into an aluminum plastic film package, dehydrating the packaged electrode assembly at 80 °C, and then injecting the prepared electrolyte solution. Performing vacuum sealing, standing, chemical formation, and shaping to obtain a lithium-ion battery.

**Embodiment 2**

Identical to Embodiment 1 except that, in <Preparing a separator>, the mass ratio between the particles of the first polymer and the auxiliary binder is 85: 15 (that is, the mass percent of the first polymer is 85 wt%).

**Embodiment 3**

Identical to Embodiment 1 except that, in <Preparing a separator>, the mass ratio between the particles of the first polymer and the auxiliary binder is 80: 20 (that is, the mass percent of the first polymer is 80 wt%).

**Embodiment 4**

Identical to Embodiment 1 except that, in <Preparing a separator>, the mass ratio between the particles of the first polymer and the auxiliary binder is 75: 25 (that is, the mass percent of the first polymer is 75 wt%).

**Embodiment 5**

Identical to Embodiment 1 except that, in <Preparing a separator>, the mass ratio between the particles of the first polymer and the auxiliary binder is 70: 30 (that is, the mass percent of the first polymer is 70 wt%).

**Embodiment 6**

Identical to Embodiment 1 except that, in <Preparing a separator>, the mass ratio between the particles of the first polymer and the auxiliary binder is 65: 35 (that is, the mass percent of the first polymer is 65 wt%).

**Embodiment 7**

Identical to Embodiment 1 except that, in <Preparing a separator>, the mass ratio between the particles of the first polymer and the auxiliary binder is 60: 40 (that is, the mass percent of the first polymer is 60 wt%).

**Embodiment 8**

Identical to Embodiment 4 except that, in <Preparing particles of a first polymer>, the softening point of the first polymer is adjusted to 90 °C.

**Embodiment 9**

Identical to Embodiment 4 except that, in <Preparing particles of a first polymer>, the softening point of the first polymer is adjusted to 100 °C.

**Embodiment 10**

Identical to Embodiment 4 except that, in <Preparing particles of a first polymer>, the softening point of the first polymer is adjusted to 110 °C.

**Embodiment 11**

Identical to Embodiment 4 except that, in <Preparing particles of a first polymer>, the softening point of the first polymer is adjusted to 130 °C.

**Embodiment 12**

Identical to Embodiment 4 except that, in <Preparing particles of a first polymer>, the softening point of the first polymer is adjusted to 140 °C.

**Embodiment 13**

Identical to Embodiment 4 except that, in <Preparing particles of a first polymer>, the softening point of the first polymer is adjusted to 150 °C.

**Embodiment 14**

Identical to Embodiment 4 except that, in Embodiment 14, the polyvinylidene difluoride particles of the first coating layer are replaced by a copolymer of 75 wt% vinylidene fluoride and 25 wt% hexafluoropropylene.

**Embodiment 15**

Identical to Embodiment 4 except that, in Embodiment 15, the polyvinylidene difluoride particles of the first coating layer are replaced by a copolymer of 60 wt% styrene, 25 wt% butadiene, and 15 wt% acrylic acid.

**Embodiment 16**

Identical to Embodiment 4 except that, in Embodiment 16, the polyvinylidene difluoride particles of the first coating layer are replaced by a copolymer of 70 wt% styrene and 30 wt% acrylate.

**Embodiment 17**

Identical to Embodiment 4 except that, in Embodiment 17, the polyvinylidene difluoride particles of the first coating layer are replaced by a copolymer of 30 wt% acrylic acid, 35 wt% acrylonitrile, and 35 wt% styrene.

**Embodiment 18**

Identical to Embodiment 4 except that, in <Preparing a separator>, the thickness of the first coating layer is 3 $\mu$m.

**Embodiment 19**

Identical to Embodiment 4 except that, in <Preparing a separator>, the thickness of the first coating layer is 5 $\mu$m.

**Embodiment 20**

Identical to Embodiment 4 except that, in <Preparing a separator>, the thickness of the first coating layer is 8 $\mu$m.

**Embodiment 21**

Identical to Embodiment 4 except that, in <Preparing a separator>, the thickness of the first coating layer is 50 $\mu$m.

**Embodiment 22**

Identical to Embodiment 4 except that, in <Preparing a separator>, the thickness of the first coating layer is 10 $\mu$m.

**Embodiment 23**

Identical to Embodiment 4 except that, in <Preparing a separator>, the thickness of the first coating layer is 40 $\mu$m.

**Embodiment 24**

Identical to Embodiment 4 except that, in <Preparing a separator>, a second coating layer is added, and the operations of <Preparing a lithium-ion battery> are different from those in Embodiment 4.

<Preparing a second coating layer>

Adding a polymer binder of a non-core-shell structure (a copolymer polymerized from 80 wt% styrene, 10 wt% isobutyl acrylate, and 10 wt% acrylonitrile, with $D_{V50}$ of 0.3 $\mu$m), sodium carboxymethylcellulose as a thickener, and dimethylsiloxane as a wetting agent into a stirrer at a mass ratio of 85: 14: 1, and stirring well; and then adding deionized water and stirring, adjusting the viscosity of the slurry to 40 mPa·s, and adjusting the solid content to 5%, so as to obtain a slurry B. Applying the slurry B evenly onto the other surface of the PE substrate to obtain a 2 $\mu$m-thick second coating layer, and completing drying in an oven.

<Preparing a lithium-ion battery>

Stacking the prepared positive electrode plate, separator, and negative electrode plate sequentially in such a way that the surface, coated with the first coating layer, of the separator is in contact with the positive electrode plate and that the surface, coated with the second coating layer, of the separator is in contact with the negative electrode plate. Winding the stacked structure to obtain an electrode assembly. Putting the electrode assembly into an aluminum plastic film package, dehydrating the packaged electrode assembly at 80 °C, and then injecting the prepared electrolyte solution. Performing vacuum sealing, standing, chemical formation, and shaping to obtain a lithium-ion battery.

**Embodiment 25**

Identical to Embodiment 24 except that, in <Preparing a separator>, the thickness of the second coating layer is adjusted to 0.2 $\mu$m.

### Embodiment 26

Identical to Embodiment 24 except that, in <Preparing a separator>, the thickness of the second coating layer is adjusted to 4 $\mu$m.

### Embodiment 27

Identical to Embodiment 24 except that, in <Preparing a separator>, an inorganic coating layer is disposed between the first coating layer and the substrate, as shown in FIG. 3. The thickness of the inorganic coating layer is 3 $\mu$m, the inorganic particles in the inorganic coating layer are boehmite, $D_{V50}$ is 0.75 $\mu$m, and the length-to-diameter ratio is 1.

### Embodiment 28

Identical to Embodiment 27 except that, in <Preparing a separator>, the thickness of the inorganic coating layer is adjusted to 0.5 $\mu$m, and $D_{V50}$ of the boehmite is 0.85 $\mu$m.

### Embodiment 29

Identical to Embodiment 27 except that, in <Preparing a separator>, the thickness of the inorganic coating layer is adjusted to 6 $\mu$m, and $Dv_{50}$ is 0.99 $\mu$m.

### Embodiment 30

Identical to Embodiment 24 except that, in <Preparing a separator>, an inorganic coating layer is disposed between the second coating layer and the substrate, and the inorganic particles in the inorganic coating layer is aluminum oxide with $D_{V50}$ of 0.99 $\mu$m, as shown in FIG. 4. The thickness of the inorganic coating layer is 3 $\mu$m.

### Embodiment 31

Identical to Embodiment 24 except that, in <Preparing a separator>, an inorganic coating layer is disposed between the first coating layer and the substrate, and between the second coating layer and the substrate, and the inorganic particles in the inorganic coating layer is aluminum oxide with $D_{V50}$ of 0.99 $\mu$m, as shown in FIG. 5. The thickness of a single inorganic coating layer is 2 $\mu$m.

### Embodiment 32

Identical to Embodiment 4 except that, in <Preparing particles of a first polymer>, the primary particles of the prepared first polymer are agglomerated to form secondary particles.

<Preparing secondary particles>

Dispersing the primary particles of the first polymer into deionized water, and stirring the mixture with an MSK-SFM-10 vacuum mixer for 120 minutes at a revolution speed of 40 rpm and an axial rotation speed of 1500 rpm to obtain a primary-particle slurry with a solid content of 10%.

Moving the primary-particle slurry into a centrifugal disc atomizer of a spray-drying granulator, and operating the granulator at a centrifugal rotation speed of 2000 rpm to form tiny droplets. Setting an inlet temperature of the spray-drying granulator to 110 °C and setting an outlet temperature to 100 °C, cooling down the slurry, and collecting powder to obtain PVDF secondary particles.

### Comparative Embodiment 1

Identical to Embodiment 1 except that, in <Preparing a separator>, the mass ratio between the particles of the first polymer and the auxiliary binder is 95: 5 (that is, the mass percent of the first polymer is 95 wt%).

### Comparative Embodiment 2

Identical to Embodiment 1 except that, in <Preparing a separator>, the mass ratio between the particles of the first polymer and the auxiliary binder is 55: 45 (that is, the mass percent of the first polymer is 55 wt%).

**Comparative Embodiment 3**

Identical to Embodiment 1 except that, in <Preparing particles of a first polymer>, the softening point of the first polymer is adjusted to 165 °C.

**Comparative Embodiment 4**

Identical to Embodiment 1 except that, in <Preparing particles of a first polymer>, the softening point of the first polymer is adjusted to 70 °C.

**Comparative Embodiment 5**

Identical to Embodiment 27 except that, in <Preparing particles of a first polymer>, the mass ratio between the particles of the first polymer and the auxiliary binder is adjusted to 55: 45 (that is, the mass percent of the first polymer is 55 wt%), and the softening point of the first polymer is 70 °C.
The preparation parameters and test results of the embodiments and comparative embodiments are shown in Table 1 and Table 2 below.

**Table 1**

| Serial number | Constituents of first polymer | Content of first polymer (wt%) | Softening point of first polymer (°C) | Ionic resistance of separator (Ω) | Bonding force F to positive electrode plate (N) | Low-temperature capacity retention rate (-20 °C, %) | Discharge rate (25 °C, 1.5 C, %) |
|---|---|---|---|---|---|---|---|
| Embodiment 1 | Polyvinylidene difluoride | 90 | 120 | 0.68 | 3.0 | 92.2 | 90.5 |
| Embodiment 2 | Polyvinylidene difluoride | 85 | 120 | 0.70 | 8.4 | 91.1 | 88.9 |
| Embodiment 3 | Polyvinylidene difluoride | 80 | 120 | 0.72 | 13.2 | 90.4 | 87.2 |
| Embodiment 4 | Polyvinylidene difluoride | 75 | 120 | 0.74 | 19.5 | 89.5 | 88.1 |
| Embodiment 5 | Polyvinylidene difluoride | 70 | 120 | 0.76 | 24.7 | 88.1 | 86.5 |
| Embodiment 6 | Polyvinylidene difluoride | 65 | 120 | 0.78 | 29.1 | 87.0 | 85.4 |
| Embodiment 7 | Polyvinylidene difluoride | 60 | 120 | 0.80 | 35.0 | 86.0 | 84.3 |
| Embodiment 8 | Polyacrylic ester | 75 | 90 | 0.81 | 30.1 | 81.3 | 80.8 |
| Embodiment 9 | Polyacrylic ester | 75 | 100 | 0.78 | 25.1 | 89.1 | 87.8 |
| Embodiment 10 | Polyacrylic ester | 75 | 110 | 0.75 | 20.1 | 89.4 | 86.8 |
| Embodiment 11 | Polyacrylic ester | 75 | 130 | 0.72 | 15.1 | 90.6 | 88.7 |
| Embodiment 12 | Polyacrylic ester | 75 | 140 | 0.69 | 10.1 | 90.0 | 88.9 |
| Embodiment 13 | Polyacrylic ester | 75 | 150 | 0.66 | 5.1 | 90.8 | 88.7 |
| Embodiment 14 | Copolymer formed by 75 wt% VDF and 25 wt% hexafluoropropylene | 75 | 115 | 0.75 | 19.6 | 89.2 | 87.7 |
| Embodiment 15 | Copolymer formed by 60 wt% styrene, 25 wt% butadiene, 15 wt% acrylic acid | 75 | 130 | 0.77 | 18.7 | 88.1 | 88.5 |
| Embodiment 16 | Copolymer formed by 70 wt% styrene and 30 wt% acrylate | 75 | 140 | 0.75 | 19.1 | 88.5 | 86.8 |

EP 4 318 778 A1

(continued)

| Serial number | Constituents of first polymer | Content of first polymer (wt%) | Softening point of first polymer (°C) | Ionic resistance of separator ($\Omega$) | Bonding force F to positive electrode plate (N) | Low-temperature capacity retention rate (-20 °C, %) | Discharge rate (25 °C, 1.5 C, %) |
|---|---|---|---|---|---|---|---|
| Embodiment 17 | Copolymer formed by 30 wt% acrylic acid, 35 wt% acrylonitrile, 35 wt% styrene | 75 | 100 | 0.74 | 18.4 | 89.0 | 88.4 |
| Comparative Embodiment 1 | Polyvinylidene difluoride | 95 | 120 | 0.66 | 2.0 | 70.2 | 68.8 |
| Comparative Embodiment 2 | Polyvinylidene difluoride | 55 | 120 | 0.90 | 40.0 | 74.1 | 72.2 |
| Comparative Embodiment 3 | Polyvinylidene difluoride | 90 | 165 | 0.65 | 1.0 | 72.1 | 70.2 |
| Comparative Embodiment 4 | Polyvinylidene difluoride | 90 | 70 | 0.72 | 10.0 | 50.9 | 47.2 |

**Table 2**

| Serial number | Content of auxiliary binder (%) | Thickness of first coating layer (μm) | Number of particles of first polymer per unit area (pieces) | Thickness of second coating layer (μm) | Constituents and $D_{V50}$ of inorganic particles (μm) | Thickness of inorganic coating layer (μm) | Ionic resistance of separator (Ω) | Bonding force F to positive electrode plate (N) | Low-temperature capacity retention rate (-20 °C, %) | Discharge rate (25 °C, 1.5 C, %) |
|---|---|---|---|---|---|---|---|---|---|---|
| Embodiment 1 | 10 | 20 | 30 | - | - | - | 0.68 | 3.0 | 92.2 | 90.5 |
| Embodiment 2 | 15 | 20 | 26 | - | - | - | 0.70 | 8.4 | 91.1 | 88.9 |
| Embodiment 3 | 20 | 20 | 22 | - | - | - | 0.72 | 13.2 | 90.4 | 87.2 |
| Embodiment 4 | 25 | 20 | 20 | - | - | - | 0.74 | 19.5 | 89.5 | 88.1 |
| Embodiment 5 | 30 | 20 | 18 | - | - | - | 0.76 | 24.7 | 88.1 | 86.5 |
| Embodiment 6 | 35 | 20 | 15 | - | - | - | 0.78 | 29.1 | 87.0 | 85.4 |
| Embodiment 7 | 40 | 20 | 11 | - | - | - | 0.80 | 35.0 | 86.0 | 84.3 |
| Embodiment 8 | 25 | 20 | 20 | - | - | - | 0.81 | 30.1 | 80.3 | 79.8 |
| Embodiment 9 | 25 | 20 | 20 | - | - | - | 0.78 | 25.1 | 89.1 | 87.8 |
| Embodiment 10 | 25 | 20 | 20 | - | - | - | 0.75 | 20.1 | 89.4 | 86.8 |
| Embodiment 11 | 25 | 20 | 20 | - | - | - | 0.72 | 15.1 | 90.6 | 88.7 |
| Embodiment 12 | 25 | 20 | 20 | - | - | - | 0.69 | 10.1 | 90.0 | 88.9 |
| Embodiment 13 | 25 | 20 | 20 | - | - | - | 0.66 | 5.1 | 90.8 | 88.7 |

| Serial number | Content of auxiliary binder (%) | Thickness of first coating layer ($\mu$m) | Number of particles of first polymer per unit area (pieces) | Thickness of second coating layer ($\mu$m) | Constituents and $D_{V50}$ of inorganic particles ($\mu$m) | Thickness of inorganic coating layer ($\mu$m) | Ionic resistance of separator ($\Omega$) | Bonding force F to positive electrode plate (N) | Low-temperature capacity retention rate (-20 °C, %) | Discharge rate (25 °C, 1.5 C, %) |
|---|---|---|---|---|---|---|---|---|---|---|
| Embodiment 14 | 25 | 20 | 20 | - | - | - | 0.75 | 19.6 | 89.2 | 87.7 |
| Embodiment 15 | 25 | 20 | 19 | - | - | - | 0.77 | 18.7 | 88.1 | 88.5 |
| Embodiment 16 | 25 | 20 | 21 | - | - | - | 0.75 | 19.1 | 88.5 | 86.8 |
| Embodiment 17 | 25 | 20 | 22 | - | - | - | 0.74 | 18.4 | 89.0 | 88.4 |
| Embodiment 18 | 25 | 3 | 20 | - | - | - | 0.48 | 20.2 | 91.1 | 90.7 |
| Embodiment 19 | 25 | 5 | 20 | - | - | - | 0.50 | 19.8 | 90.7 | 89.1 |
| Embodiment 20 | 25 | 8 | 20 | - | - | - | 0.51 | 19.6 | 88.5 | 87.2 |
| Embodiment 21 | 25 | 50 | 20 | - | - | - | 1.4 | 3.0 | 76.0 | 75.1 |
| Embodiment 22 | 25 | 10 | 20 | - | - | - | 0.53 | 19.5 | 88.2 | 86.7 |
| Embodiment 23 | 25 | 40 | 20 | - | - | - | 1.0 | 12.6 | 87.5 | 85.3 |
| Embodiment 24 | 25 | 20 | 20 | 2 | - | - | 0.86 | 19.5 | 85.2 | 83.3 |
| Embodiment 25 | 25 | 20 | 20 | 0.2 | - | - | 0.76 | 19.5 | 88.1 | 85.5 |
| Embodiment 26 | 25 | 20 | 20 | 4 | - | - | 0.96 | 19.5 | 80.2 | 78.8 |

EP 4 318 778 A1

| Serial number | Content of auxiliary binder (%) | Thickness of first coating layer ($\mu$m) | Number of particles of first polymer per unit area (pieces) | Thickness of second coating layer ($\mu$m) | Constituents and $D_{V50}$ of inorganic particles ($\mu$m) | Thickness of inorganic coating layer ($\mu$m) | Ionic resistance of separator ($\Omega$) | Bonding force F to positive electrode plate (N) | Low-temperature capacity retention rate (-20 °C, %) | Discharge rate (25 °C, 1.5 C, %) |
|---|---|---|---|---|---|---|---|---|---|---|
| Embodiment 27 | 25 | 20 | 20 | 2 | Boehmite, 0.75 | 3 | 0.95 | 19.5 | 80.0 | 78.8 |
| Embodiment 28 | 25 | 20 | 20 | 2 | Boehmite, 0.85 | 0.5 | 0.90 | 19.5 | 84.0 | 80.6 |
| Embodiment 29 | 25 | 20 | 20 | 2 | Boehmite, 0.99 | 6 | 1.0 | 19.5 | 81.1 | 82.7 |
| Embodiment 30 | 25 | 20 | 20 | 2 | Aluminum oxide, 0.99 | 3 | 0.95 | 19.5 | 80.3 | 81.7 |
| Embodiment 31 | 25 | 20 | 20 | 2 | Aluminum oxide, 0.99 | 2 | 0.95 | 19.5 | 80.2 | 80.2 |
| Embodiment 32 | 25 | 20 | 20 | - | - | - | 0.72 | 19.5 | 89.4 | 88.1 |
| Comparative Embodiment 5 | 45 | 20 | 20 | 2 | Boehmite, 0.75 | 3 | 0.92 | 9.5 | 63.5 | 62.6 |
| In Table 2, "-" means that no such constituents are contained. | | | | | | | | | | |

EP 4 318 778 A1

As can be seen from Embodiments 1 to 7 and Comparative Embodiments 1 to 2, with the increase of the content of the first polymer in the first coating layer, the number of particles of the first polymer per unit area on the surface of the separator in the SEM image increases, and the bonding force F between the first coating layer of the separator and the positive electrode plate diminishes gradually. However, when the content of the first polymer is overly high (as in Comparative Embodiment 1), the bonding force between the first coating layer and the positive electrode is impaired. When the content of the first polymer is overly low (as in Comparative Embodiment 2), the low-temperature capacity retention rate of the lithium-ion battery is impaired. As can be seen from Embodiments 4 and 8 to 13 and Comparative Embodiments 3 to 4, with the increase of the softening point of the first polymer, the bonding force F between the first coating layer and the positive electrode plate shows a downward trend, and the low-temperature capacity retention rate of lithium-ion battery substantially shows an upward trend. However, when the softening point of the first polymer is overly high (as in Comparative Embodiment 3), the bonding force between the first coating layer and the electrode plate is impaired. When the softening point of the first polymer is overly low (as in Comparative Embodiment 4), the low-temperature capacity retention rate of lithium-ion battery is impaired. Evidently, by controlling both the content and the softening point of the first polymer to fall within the ranges specified herein, the lithium-ion battery is superior in overall performance such as interfacial bonding performance, low-temperature cycle performance, and rate performance.

As can be seen from Embodiment 27 and Comparative Embodiment 5, by controlling both the content and the softening point of the first polymer to fall within the ranges specified herein, the interfacial bonding performance of the first coating layer and the low-temperature cycle performance of the lithium-ion battery can be improved.

The constituents of the first polymer usually also affect the performance of the first coating layer. As can be seen from Embodiments 1 to 17, the first coating layer containing the first polymer constituents specified herein endows the lithium-ion battery with superior low-temperature cycle performance and superior rate performance.

As can be seen from Embodiments 4 and 18 to 23, with the increase of the thickness of the first coating layer, the bonding force F between the first coating layer and the positive electrode plate increases, and the low-temperature capacity retention rate of the lithium-ion battery substantially shows an upward trend. As can be seen from Embodiment 4, Embodiments 18 to 20, Embodiments 22 to 23, and Embodiment 21, by controlling the thickness of the first coating layer to fall within the range specified herein, the ion conductivity, interfacial bonding performance, low-temperature cycle performance, and rate performance of the lithium ion battery can be further improved.

The thickness of the second coating layer, the thickness of the inorganic coating layer, the constituents and particle size of the inorganic particles, as well as the arrangement of the second coating layer and the inorganic coating layer in the separator usually also affect the performance of the separator, and in turn, affect the kinetic performance of the lithium-ion battery. As can be seen from Embodiments 24 to 31, as long as the thickness of the second coating layer and the thickness of the inorganic coating layer fall within the ranges specified herein, the lithium-ion battery with excellent low-temperature cycle performance can be obtained.

As can be seen from Embodiments 4 and 32, the separator containing the secondary particles of the first polymer possesses a lower ionic resistance. A possible reason is that a relatively large number of voids exist inside the secondary particle, and the electrolyte solution can permeate into the voids more easily, thereby improving the infiltration effect of the electrolyte solution for the separator of this application.

What is described above is merely exemplary embodiments of this application, but is not intended to limit this application. Any modifications, equivalent replacements, improvements, and the like made without departing from the spirit and principles of this application still fall within the protection scope of this application.

**Claims**

1. A separator, comprising: a substrate and a first coating layer disposed on at least one surface of the substrate; wherein

    the first coating layer comprises a first polymer; and
    based on a total mass of the first coating layer, a mass percent x of the first polymer is 60 wt% to 90 wt%, and a softening point of the first polymer is 90 °C to 150 °C.

2. The separator according to claim 1, wherein a thickness of the first coating layer is 3 $\mu$m to 40 $\mu$m.

3. The separator according to claim 1, wherein, in any region of 250 $\mu$m $\times$ 200 $\mu$m on a surface of the first coating layer, a number of particles of the first polymer with a maximum length of 10 $\mu$m to 30 $\mu$m is 10 to 30.

4. The separator according to claim 1, wherein an ionic resistance Z of the separator is 0.5 S2 to 1.2 Q.

5. The separator according to claim 1, wherein the mass percent x of the first polymer and the ionic resistance Z of the separator satisfy:

Z = x·b, wherein b represents a first ionic resistance coefficient, and $1 \leq b \leq 1.2$.

6. The separator according to claim 1, wherein a bonding force F between the first coating layer and a positive electrode plate is 3 N/m to 35 N/m.

7. The separator according to claim 1, wherein the mass percent x of the first polymer and the bonding force F between the first coating layer and the positive electrode plate satisfy:

F = x·a, wherein a represents an adhesion coefficient, and $5.0 \leq a \leq 30$.

8. The separator according to claim 1, wherein the first coating layer further comprises an auxiliary binder, and, based on the total mass of the first coating layer, a mass percent of the auxiliary binder is 10 wt% to 40 wt%.

9. The separator according to claim 8, wherein the auxiliary binder comprises at least one of ethyl acrylate, butyl acrylate, ethyl methacrylate, styrene, chlorostyrene, fluorostyrene, methylstyrene, acrylic acid, methacrylic acid, maleic acid, acrylonitrile, or butadiene.

10. The separator according to claim 1, wherein the first polymer comprises at least one of vinylidene fluoride, hexafluoropropylene, ethylene, propylene, chloroethylene, chloropropylene, acrylic acid, acrylate, styrene, butadiene, or acrylonitrile.

11. The separator according to claim 1, wherein the first polymer is a secondary particle, and a particle diameter $D_{V50}$ of the secondary particle is 10 μm to 30 μm.

12. The separator according to claim 1, wherein one surface of the substrate is coated with the first coating layer, and the other surface of the substrate is coated with a second coating layer, and a thickness of the second coating layer is 0.2 μm to 4 μm.

13. The separator according to claim 12, wherein the second coating layer comprises a second polymer, and, based on a total mass of the second coating layer, a mass percent of the second polymer is 78 wt% to 87.5 wt%.

14. The separator according to claim 12, wherein the second coating layer comprises a second polymer; the second polymer comprises a high-molecular-weight polymer of a core-shell structure or a high-molecular-weight polymer of a non-core-shell structure; a core of the high-molecular-weight polymer of a core-shell structure comprises at least one of ethyl acrylate, butyl acrylate, ethyl methacrylate, styrene, chlorostyrene, fluorostyrene, methylstyrene, acrylic acid, methacrylic acid, or maleic acid; a shell of the high-molecular-weight polymer of a core-shell structure comprises at least one of methyl acrylate, ethyl acrylate, butyl acrylate, methyl methacrylate, ethyl methacrylate, butyl methacrylate, ethylene, chlorostyrene, fluorostyrene, methylstyrene, acrylonitrile, or methacrylonitrile; and the high-molecular-weight polymer of a non-core-shell structure is at least one selected from acrylic acid, acrylate, butadiene, styrene, acrylonitrile, ethylene, chlorostyrene, fluorostyrene, or propylene.

15. The separator according to claim 12, wherein an inorganic coating layer is further disposed between the first coating layer and the substrate and/or between the second coating layer and the substrate, and a thickness of the inorganic coating layer is 0.5 μm to 6 μm.

16. The separator according to claim 15, wherein the inorganic coating layer comprises an inorganic particle; the inorganic particle comprises at least one of boehmite, magnesium hydroxide, aluminum oxide, titanium dioxide, silicon dioxide, zirconium dioxide, tin dioxide, magnesium oxide, zinc oxide, barium sulfate, boron nitride, aluminum nitride, or silicon nitride; and $D_{V50}$ of the inorganic particle is 0.1 μm to 3 μm.

17. The separator according to claim 16, wherein the inorganic particle is boehmite, $D_{V50}$ of the boehmite is 0.1 μm to 3 μm, and a length-to-diameter ratio of the boehmite is 1 to 3.

18. An electrochemical device, comprising a positive electrode plate, a negative electrode plate, a separator, and an electrolyte solution, wherein the separator is located between the positive electrode plate and the negative electrode plate, and the separator is the separator according to any one of claims 1 to 17.

19. An electronic device, comprising the electrochemical device according to claim 18.

FIG. 1

FIG. 2

FIG. 3

FIG. 4

FIG. 5

## INTERNATIONAL SEARCH REPORT

| International application No. |
| --- |
| **PCT/CN2021/084661** |

**A.    CLASSIFICATION OF SUBJECT MATTER**

H01M 50/449(2021.01)i;  H01M 50/426(2021.01)n;  H01M 50/443(2021.01)n

According to International Patent Classification (IPC) or to both national classification and IPC

**B.        FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 粘附, 粘结, 黏附, 附着, 剥离, 黏接, 粘接, 黏结, 阻抗, 阻值, 电阻, "N/M", 隔膜, 隔离膜, 分隔件, 电池, 聚合物, 有机物, 岛状, adhere, bind+, adhesive, glue, peel 1w off, resistance, impedance, film, membrane, separator, battery, cell, polymer, organic, island

**C.        DOCUMENTS CONSIDERED TO BE RELEVANT**

| Category* | Citation of document, with indication, where appropriate, of the relevant passages | Relevant to claim No. |
| --- | --- | --- |
| X | CN 104600233 A (XIAMEN UNIVERSITY) 06 May 2015 (2015-05-06) description paragraphs 3, 12-54 and figure 4 | 1, 2, 4, 5, 8-10, 18, 19 |
| Y | CN 104600233 A (XIAMEN UNIVERSITY) 06 May 2015 (2015-05-06) description paragraphs 3, 12-54 and figure 4 | 3, 6, 7, 11-17 |
| Y | CN 109148798 A (SUNWODA ELECTRONIC CO., LTD.) 04 January 2019 (2019-01-04) description paragraphs 43-74, 86, 100-107, 112-120, 131-137, tables 1-2, and figures 1-4 | 3, 6, 7, 11-17 |
| X | CN 108878748 A (NINGDE AMPEREX TECHNOLOGY LTD.) 23 November 2018 (2018-11-23) description paragraphs 37-81, 85-93 | 1, 2, 8-10, 18-19 |
| A | CN 105440770 A (CHENGDU ZHONGKE LAIFANG ENERGY TECHNOLOGY CO., LTD.) 30 March 2016 (2016-03-30) entire document | 1-19 |
| A | CN 102610773 A (NINGDE AMPEREX TECHNOLOGY LTD. et al.) 25 July 2012 (2012-07-25) entire document | 1-19 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
| --- | --- |
| **13 December 2021** | **30 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2021/084661** |

**C.** **DOCUMENTS CONSIDERED TO BE RELEVANT**

| Category* | Citation of document, with indication, where appropriate, of the relevant passages | Relevant to claim No. |
|---|---|---|
| A | CN 111312971 A (RISESUN MGL NEW ENERGY TECHNOLOGY CO., LTD.) 19 June 2020 (2020-06-19)<br>entire document | 1-19 |

Form PCT/ISA/210 (second sheet) (January 2015)

**INTERNATIONAL SEARCH REPORT**
Information on patent family members

International application No.

**PCT/CN2021/084661**

| Patent document cited in search report | | | Publication date (day/month/year) | Patent family member(s) | | | Publication date (day/month/year) |
|---|---|---|---|---|---|---|---|
| CN | 104600233 | A | 06 May 2015 | None | | | |
| CN | 109148798 | A | 04 January 2019 | CN | 109148798 | B | 22 June 2021 |
| CN | 108878748 | A | 23 November 2018 | EP | 3588613 | A1 | 01 January 2020 |
| | | | | US | 2019393466 | A1 | 26 December 2019 |
| CN | 105440770 | A | 30 March 2016 | EP | 3163652 | A4 | 31 May 2017 |
| | | | | US | 10497914 | B2 | 03 December 2019 |
| | | | | TW | I539647 | B | 21 June 2016 |
| | | | | US | 2017162848 | A1 | 08 June 2017 |
| | | | | KR | 20170026547 | A | 08 March 2017 |
| | | | | WO | 2016000276 | A1 | 07 January 2016 |
| | | | | EP | 3163652 | B1 | 20 February 2019 |
| | | | | TW | 201601367 | A | 01 January 2016 |
| | | | | CN | 105440770 | B | 04 May 2021 |
| | | | | EP | 3163652 | A1 | 03 May 2017 |
| | | | | JP | 2017525100 | A | 31 August 2017 |
| CN | 102610773 | A | 25 July 2012 | CN | 102610773 | B | 06 June 2017 |
| | | | | JP | 2013187196 | A | 19 September 2013 |
| | | | | US | 2013236765 | A1 | 12 September 2013 |
| CN | 111312971 | A | 19 June 2020 | None | | | |

Form PCT/ISA/210 (patent family annex) (January 2015)

**EP 4 318 778 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 27901995 T